(19)

Europäisches
Patentamt

European
Patent Office

Office européen
des brevets

(11)    **EP 1 651 977 B1**

(12)                    **EUROPEAN PATENT SPECIFICATION**

(45) Date of publication and mention
of the grant of the patent:
**28.10.2009  Bulletin 2009/44**

(51) Int Cl.:
***G01S 5/14*** *(2006.01)*        ***G01S 1/00*** *(2006.01)*

(21) Application number: **04779509.1**

(22) Date of filing: **28.07.2004**

(86) International application number:
**PCT/US2004/024467**

(87) International publication number:
**WO 2005/012940 (10.02.2005 Gazette 2005/06)**

(54) **ALTITUDE AIDING IN A SATELLITE POSITIONING SYSTEM**

HÖHENHILFE IN EINEM SATELLITENPOSITIONIERUNGSSYSTEM

SYSTEME DE POSITIONNEMENT SATELLITE ASSOCIE A L'ALTITUDE

(84) Designated Contracting States:
**AT BE BG CH CY CZ DE DK EE ES FI FR GB GR
HU IE IT LI LU MC NL PL PT RO SE SI SK TR**

(30) Priority: **01.08.2003  US 633488**

(43) Date of publication of application:
**03.05.2006  Bulletin 2006/18**

(73) Proprietor: **SiRF Technology, Inc.
San Jose, CA 95112 (US)**

(72) Inventors:
 • **PHATAK, Makarand
  Sunyvale, CA 94087 (US)**
 • **COX, Geoffrey, F.
  Camden, ME 04843 (US)**

 • **GARIN, Lionel, J.
  Palo Alto, CA 94303 (US)**

(74) Representative: **Kramer - Barske - Schmidtchen
European Patent Attorneys
Landsberger Strasse 300
80687 München (DE)**

(56) References cited:
**US-A- 6 061 018     US-B1- 6 552 681**

 • **PTASINSKI P ET AL: "Altitude aiding for GPS
  systems using elevation map datasets"
  JOURNAL OF NAVIGATION CAMBRIDGE
  UNIVERSITY PRESS FOR R. INST. NAVIGATION
  AT R. GEOGR. SOC UK, vol. 55, no. 3, September
  2002 (2002-09), pages 451-462, XP008039785
  ISSN: 0373-4633**

**Description**

**Field of the Invention.**

This invention relates generally to satellite positioning system receivers and more particularly to altitude aided satellite positioning system receivers.

**Related Art.**

Satellite positioning systems (SATPS) have been developed that enable SATPS receivers to determine a location upon receiving a SATPS spread spectrum signal from a plurality of satellites. An example of a SATPS is the Global Positioning Satellite (GPS) system maintained by the United States Government. A SATPS receiver must acquire four satellites in order to determine the location (latitude, longitude and altitude) of the SATPS receiver. However, in urban and rural indoor or outdoor environments, fewer than the required satellites may be acquired. Further, strong signal shading and signal fading may adversely affect a SATPS receiver is ability to acquire the satellites. If four satellites are acquired, then a three-dimensional location may be determined. If three satellites are acquired, then a two-dimensional location (latitude and longitude) may be determined if altitude is known. Accurate two-dimensional location with three satellites is further impacted if the altitude is not adequately known, for example, when the SATPS receiver is used in a region of uneven elevation, such as in the mountains. One approach to assisting with location determination if three satellites are acquired employs an algorithm that uses the last known altitude calculated from four acquired satellites. However, the more the altitude of the SATPS receiver has changed from the last known altitude, the greater the error that results in the location of the SATPS receiver location determination.

US 6 061 018 discloses a method, a receiver, a medium and a server according to the respective preambles of claims 1, 8, 15 and 19.

Therefore, there is a need for methods and systems for determining the location of a SATPS receiver when only three satellites are acquirable, that overcomes the many disadvantages set forth above and others previously experienced.

**SUMMARY**

This is achieved by the present invention as defined in claims 1, 8, 15 and 19. Further advantageous embodiments are defined in the dependent claims.

**BRIEF DESCRIPTION OF THE FIGURES**

The components in the figures are not necessarily to scale, emphasis instead being placed upon illustrating the principles of the invention. In the figures, like reference numerals designate corresponding parts throughout the different views.

FIG. 1 illustrates a satellite positioning system (SATPS) with four satellites and a SATPS receiver.

FIG. 2 is a block diagram of a SATPS receiver of FIG. 1 in communication with a server having digital terrain elevation data.

FIG. 3 is a diagram of bilinear interpolation employed with digital terrain elevation data of FIG. 2.

FIG. 4 is an illustration of the four orthometric heights identified in FIG. 3.

FIG. 5 is a flow chart of the steps for determining location with a SATPS receiver with digital terrain elevation data.

**DETAILED DESCRIPTION**

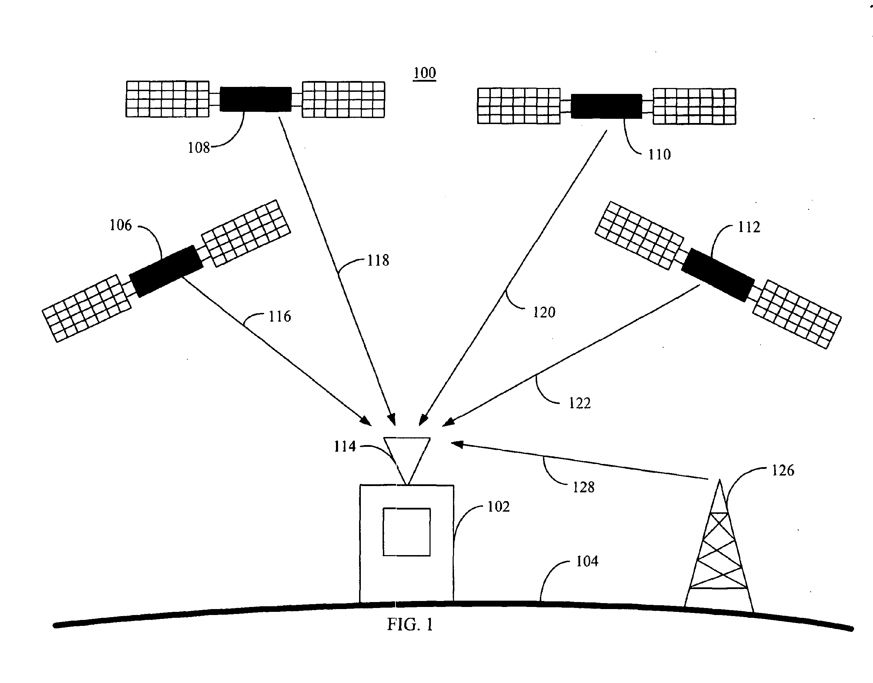

Turning first to Figure 1, that figure illustrates a satellite position system (SATPS) 100 with a SATPS receiver 102 located on the Earth 104 in communication with four satellites 106, 108, 110, and 112. The SATPS receiver 102 via antenna 114 receives the SATPS spread spectrum signals 116, 118, 120, and 122 from the four satellites 106, 108, 110, and 112. The four SATPS spread spectrum signals 116, 118, 120, and 122 are transmitted at the same frequency. It is desirable for the SATPS receiver 102 to be receiving SATPS spread spectrum signals from as many satellites as possible, but to resolve the location, such as the x, y and z or latitude, longitude and altitude coordinates, at least three SATPS satellites in the SATPS system 100 must be in communication with the SATPS receiver 102 along with knowledge of the altitude of the receiver. Otherwise at least four SATPS satellites are required.

As an alternative to a SATPS spread spectrum signal from one of the satellites 106, 108, 110, or 112, an Earth based pseudollite 126 may transmit a SATPS spread spectrum signal 128 to the SATPS receiver 102. The SATPS receiver 102 still requires three spread spectrum signals and knowledge of altitude in order to determine the location of the SATPS receiver 102. In another implementation, a combined wireless device and SATPS receiver 102, such as in a cellular telephone, may receive altitude information from the pseudollite 126. In other implementations, the altitude information may be transmitted by a wireless data network such as a PCS system, Bluetooth system, private wireless data network, and within a television carrier wave to name but a few examples.

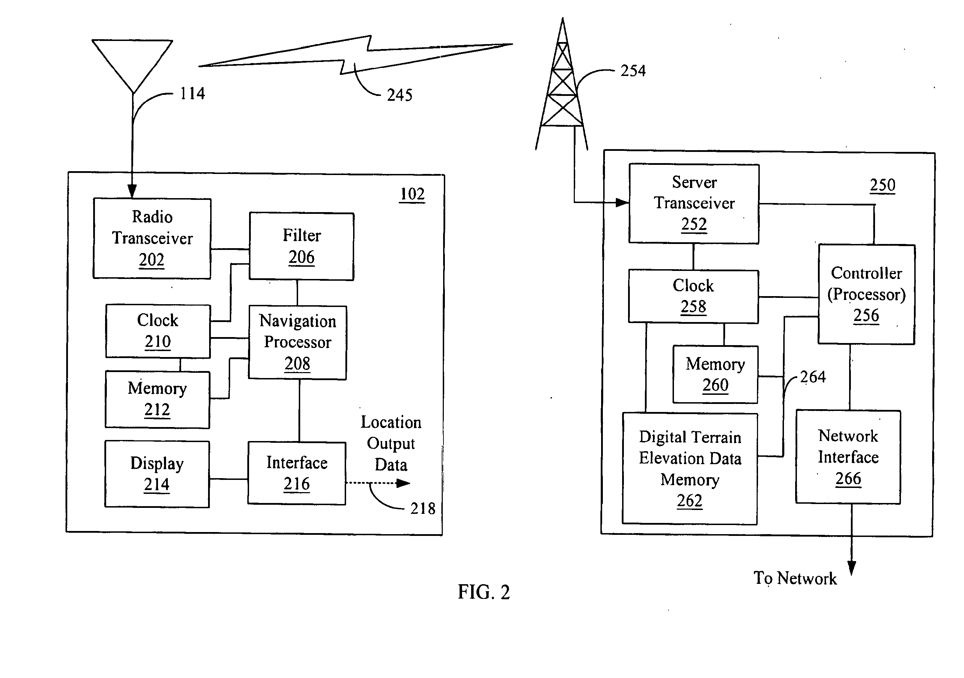

In FIG. 2, a block diagram of a SATPS receiver 102 of FIG. 1 in communication with a server 250 having digital terrain elevation data is shown. The SATPS receiver 102 acquires three SATPS spread spectrum signals, such as 116, 118 and 120 at the radio transceiver 202 via antenna 114. The SATPS spread spectrum signals are filtered by filter 206 under the control of navigation processor 208. The navigation processor 208 is coupled to the filter 206, clock 210, memory 212, and interface 216. The clock 210 may provide a plurality of clock signals from an oscillator to aid in the acquisition and processing of the SATPS spread spectrum signals and additionally provides timing for the navigation processor 208 to transfer data to and from the filter 206, memory 212 and interface 216. The interface 216 may be coupled to a display 214 or the location output data 210 may be outputted by interface 216.

The terrain database is not communicated from the server 250 to the SATPS receiver 102 in the current implementation. Rather the code phases are sent from the SATPS receiver 102 to the server 250. These code phases are converted to pseudo-range measurements in the server 250. The computation of position determination using the terrain database is not done in the navigation processor 208. Rather the computation is done in a processor of 250, such as controller 256.

If the SATPS receiver 102 is able to only receive or acquire three SATPS spread spectrum signals, such as 116, 118 and 120, the navigation processor 208 provides code phase information associated with the SATPS satellite signals to the server 250. The server 250 is shown in radio communication with the SATPS receiver 102 via server transceiver 252. The server 250 has a controller 256 connected to the server transceiver 252, clock 258, memory 260, digital terrain elevation data memory 262, and network interface 266. The clock 258 may supply a plurality of timing signals for use by the server transceiver 252, the controller 256, the memory 260, and digital terrain elevation data memory 262. The controller 256 is connected to the memory 260 and digital terrain elevation data memory 262 by a data bus 264. The controller 256 is also coupled to a network interface 266 that enables the server 250 to communicate with a larger network. The network may be a PCS network, cellular network, PSTN network, Bluetooth network, or other known wired or wireless type of network.

The instructions that are executed by the controller 256 and control the operation of the server 250 may be contained in memory 260. The memory 260 may be any type of memory or storage device that accepts and stores machine-readable instructions. The memory 260 and digital terrain elevation data memory 262 are shown as being separate memory, but in other implementations, only one memory may be employed.

A request for processing with the use of digital terrain elevation data is received from the SATPS receiver 102 by the server transceiver 252 via antenna 254 and processed by the controller 256 under the control of machine-readable instructions in memory 260. The request from the SATPS receiver 102 contains the code phases that are associated with the appropriate SATPS satellites 106, 108 and 110. The server 250 may use the code phases from the SATPS receiver 102 to determine an estimated location. In other implementations, the request from the SATPS receiver 102 may contain an estimate of the location of the SATPS receiver 102. The controller 256 accesses the digital terrain elevation data memory 262 via data bus 264 to retrieve the digital terrain elevation data associated with the SATPS receiver's 102 estimated location. Examples of estimating the location of the SATPS receiver 102 at the server 250 include using either the last known position of the SATPS receiver 102 or a triangulation scheme with directional antennas and known power setting of the radio transceiver 202.

The digital terrain elevation data from the digital terrain elevation data memory 262 is then processed by controller 256 to determine the location of the receiver 102. Upon determination of the location of the SATPS receiver 102, a message containing that location is sent to the SATPS receiver 102 by the server transceiver 252 via antenna 254. In another implementation, the digital terrain elevation data from the digital terrain elevation data memory 262 is sent to the server transceiver 252 by controller 256 and via antenna 254 and then transmitted to the SATPS receiver 102 and the navigation processor 208 determines the location of the SATPS receiver 102 using the received digital terrain elevation data. In yet other implementations, the digital terrain elevation data may be contained at a common place within the network and the server 250 would access the common place via network interface 266.

Examples of digital terrain elevation data include the 1999 NIMA standard digital dataset (DTED) level 0 for commercial and public use. The DTED provides a worldwide coverage and is a uniform matrix of terrain elevation values that provide basic quantitative data of terrain elevation, slope, and/or surface roughness information. The DTED level 0 elevation post spacing is 30 arc seconds (approximately 1 kilometer). In addition to the discrete elevation file, separate binary files may provide the minimum, maximum, and mean elevation values computed in 30 arc second square areas. Another example of digital terrain elevation data is GTOPO30 with 30 arc seconds spacing. The digital elevation model was derived from several raster and vector sources of topographic information.

The memory 212, 260 and 262 may be RAM, DRAM, SDRAM, EEPROM, a combination of RAM, DRAM, SDRAM, and EEPROM, or any other type of read/writeable memory. One skilled in the art will appreciate that all or part of systems and methods consistent with the present invention may be stored on or read from other machine-readable media, for example, secondary storage devices such as hard disks, floppy disks, and CD-ROMs; a signal received from a network; or other forms of ROM or RAM either currently known or later developed. Further, although specific components of SATPS 100 are described, one skilled in the art will appreciate that a positioning system suitable for use with methods, systems, and articles of manufacture consistent with the present invention may contain additional or different components. For example, the navigation processor 208 may be a microprocessor, microcontroller, application specific integrated circuit ("ASIC"), discrete or a combination of other types of circuits acting as a central processing unit.

The digital terrain elevation data is processed along with the code phases to determine the location of the SATPS receiver 102. The navigation processor 208 forms four simultaneous equations with data retrieved from three SATPS spread spectrum signals and the digital terrain elevation data. The fourth equation derived from the digital terrain elevation data is a result of polynomial (in 2 variables of latitude $\phi$ and longitude $\lambda$) surface fit to the appropriate terrain. To select the appropriate terrain from the digital terrain elevation data in the digital terrain elevation data memory 262 located in server 250, the SATPS spread spectrum signals 116, 118 and 120 from the three satellites 106, 108 and 110 are solved first for a fixed height "h". The fixed value of "h" may be initially assigned to the average value of "h" in the neighborhood of the base station (unlike known approaches of using the previous values of "h"). Error in the fixed "h" is the absolute value of the difference between the average and the minimum or maximum value of "h". With this information, the three SATPS satellite position solution with fixed "h" comes with an estimated error ellipse.

Grid points along the direction of the major and minor axes of the error ellipse are constructed by the navigation processor 208. The step sizes (along the directions of major and minor axes) are made proportional (1.5 times) to the magnitudes of the major and minor axes respectively. In other implementations, other step sizes may be employed along the major and minor axes. The center of the ellipse is the two-dimensional location determined from the three SATPS satellite signals 116, 118, 120 and the fixed "h". In other implementations, the step size may be different. In the current implementation, 25 points are chosen in the grid. In other implementations, different numbers of points may be selected. Altitude values above the mean sea level at these points are obtained from the digital terrain elevation data (DTED) by indexing the four corner points in which the grid point resides and then using bilinear interpolation between the corner points. The obtained height values "H" are converted to World Geodetic Datum (WGS-84) "h" by adding the Geoid "N" separation derived from Earth Gravity Model (EGM-84) at the three SATPS satellite solution point determined from the three SATPS satellite signals 116, 118 and 120 and fixed "h". Earth Gravity Model EGM-96 or other types of earth gravity models may be employed for determining Geoid "N" separations.

For the grid of 25 points of $\phi$, $\lambda$ and "h" a fourth order polynomial in $\varphi$ and $\lambda$ is found using the Least Square (LSQ) method, resulting in 15 coefficients needing to be determined. To handle ill conditioning the polynomial is found in new variables that represent a scaled deviation from the center point (the three SATPS satellite solution determined from the three SATPS satellite signals 116, 118 and 120 and fixed "h"). A numerical method of Q-R decomposition is used, such as the modified Gram-Schmidt procedure, which makes Q only orthogonal rather than orthonormal (to avoid square root operations).

The maximum deviation of the grid point altitude from the surface fit is the error associated with this fourth polynomial equation. If this error exceeds some error threshold, then the polynomial fit is rejected and more than one polynomial surface fit is required. In other implementations, different error thresholds may be employed. If the error threshold has not been exceeded, then only one polynomial surface fit is required.

The three polynomial equations associated with the three SATPS satellite signals 116, 118 and 120, and the fourth polynomial equation obtained from the terrain elevation data are solved for curvilinear coordinates of $\phi$, $\lambda$, H, and clock bias rather than using Earth Center Earth Fixed (ECEF) coordinates. The ECEF coordinate formulation is retained and changed from ECEF to WGS 84 curvilinear coordinates by the navigation processor 208 working with the corresponding Jacobian which is the coordinate transformation from differential ECEF coordinates to differential curvilinear coordinates. If there is a convergence then the converged solution is accepted if it belongs to the region of polynomial surface-fit.

Upon the location of the SATPS receiver 102 being determined and received by the SATPS receiver 102, the navigation processor 208, via interface 216 displays the location on display 214. In other implementations, the digital terrain elevation memory 262 may be contained within digital terrain elevation data memory located within the SATPS receiver 102 as separate memory or may be within memory 212. In yet other implementations, the SATPS receiver 102 is only a module of a larger device, such as a cellular phone or other wireless device where the location data is output via location data output 218 to another module within the device.

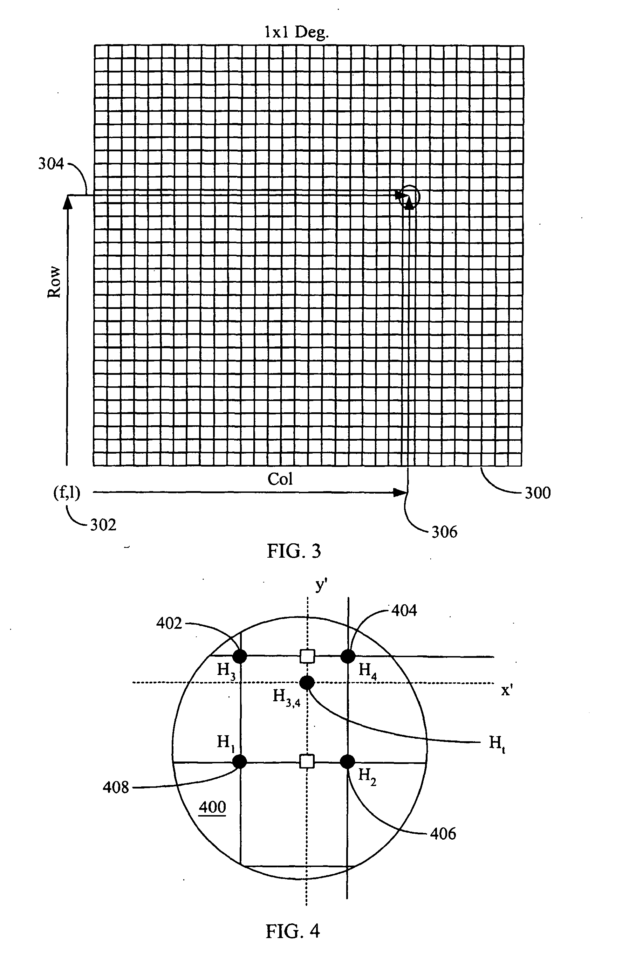

In FIG. 3, a diagram of bilinear interpolation employed with digital terrain elevation data of FIG. 2 is shown. A table 300 of digital terrain elevation data of 1x1 degree increments is accessed from the South West Corner 302 ($\phi_r$, $\lambda_r$) by row 304 and column 306. Given a latitude, $\phi_u$ and longitude, $\lambda_u$, the nearest South-West corner 302 of the table 300 (DTED data file) is found and used as a reference to find an index in table 300. This index is used to retrieve the H. In other implementations, a different position or corner of the available digital terrain elevation data and a data type other than DTED may be used with appropriate changes to the equations. The equations are:

$$y = \lambda_u - \lambda_r$$

where:

$\lambda_r$ Reference Longitude for South West Corner of an available DTED data file.
$\lambda_u$ Apriori/User Longitude.
y Difference in degrees (longitude).
[035]

$$x = \phi_u - \phi_r$$

where:

$\phi_r$     Reference Latitude for South West Corner of an available DTED data file.
$\phi_u$     User Latitude.
x     Difference in degrees (latitude)

$$brow = \left[ \frac{y * 3600}{\Delta\lambda_{spacing}} \right]$$

Where:

$\Delta\lambda_{spacing}$     DTED LEVEL 0 Grid Spacing of 30" Arc Seconds.
y     Difference in degrees.
brow     Integer Row value within DTED data file in the range [0, 119].

$$bcol = \left[ \frac{x * 3600}{\Delta\phi_{spacing}} \right]$$

Where:

$\Delta\phi_{spacing}$     DTED LEVEL 0 Grid Spacing of 30" Arc Seconds.
x     Difference in degrees.
bcol     Integer Column value within DTED data file in the range [0, 119].

The values of *brow* 304 and *bcol* 306 are used to find the index in the data file and then this index enables access to the altitude value $H_3$, latitude $\phi_3$ and longitude $\lambda_3$.

Turning to FIG. 4, a diagram 400 of the four Orthometric heights identified in FIG. 3 is shown. The Orthmetric heights $H_1$ 408, $H_2$ 406 and $H_4$ 404 are obtained from (*brow*+1) and *bcol,* (*brow*+1) and (*bcol*+1), and *brow* and (*bcol*+1) respectively. Then, H at $\phi_u$ and $\lambda_u$ is obtained by:
$$x' = \frac{(\phi_u - \phi_3)3600}{(\Delta\phi_{spacing} - bcol)}$$

where:

x'    Weighted Ratio from reference Latitude, Latitude grid spacing and DTED column location.

$$y' = \frac{(\lambda_u - \lambda_3)3600}{(\Delta\lambda_{spacing} - brow)}$$

where:

y'    Weighted Ratio from user/reference Longitude, grid spacing and DTED column location.

$$H_i = H_1 + (H_2 - H_1) \bullet x' + (H_4 - H_1) \bullet y' + (H_1 + H_3 - H_2 - H_4) \bullet x' \bullet y'$$

where:

$H_1,...,H_4,$    represent 4 Orthometric heights in a given searched row and column result.

$H_i$    The interpolated Orthometric height and 25 of these points are determined.

To estimate the 25 points of "h" requires the estimation of the Geoid N from the EGM-84 model as a function of $\phi_u$ and $\lambda_u$, the processing is the same as determining H from the DTED. Once N is estimated, a linear shift by N is used to determine "h".

The LSQ solution from the three satellite signal equations (pseudoranges) and average "h" is determined by solving:

$$\rho_1 = \sqrt{(s_{1x} - p_x)^2 + (s_{1y} - p_y)^2 + (s_{1z} - p_z)^2} \bullet (1 - m_1) + b$$

$$\rho_2 = \sqrt{(s_{2x} - p_x)^2 + (s_{2y} - p_y)^2 + (s_{2z} - p_z)^2} \bullet (1 - m_2) + b$$

$$\rho_3 = \sqrt{(s_{3x} - p_x)^2 + (s_{3y} - p_y)^2 + (s_{3z} - p_z)^2} \bullet (1 - m_3) + b$$

$$h = \sqrt{(p'_x - p_x)^2 + (p'_y - p_y)^2 + (p'_z - p_z)^2} \bullet \mathrm{sgn}(h)$$

where $(s_{1x}, s_{1y}, s_{1z})$ are the ECEF coordinates of antenna phase center of a SATPS satellite "i" at the receive time, $(p_x, p_y, p_z)$ are the ECEF coordinates of the antenna 114 phase center of the SATPS receiver 102, "b" is common offset in pseudorange measurements, $m_i$ is satellite mean motion correction term (given below), $(p'_x, p'_y, p'_z)$ are ECEF coordinates of projection of $(p_x, p_y, p_z)$ on the WGS-84 ellipsoid, $\rho_i$ is the measured pseudorange for SATPS satellite i, h is the height above WGS-84 ellipsoid and sgn(h)=1 if h>0, sgn(h)=-1 if h<0, and it is undefined when h=0 (here the equation itself reduces to an identity but the differential version of the equation is still defined). The "h" is given by the average "h" as obtained previously. The receive time is assumed to have errors of less than approximately 10ms so that the SATPS satellites 106, 108 and 110 positions as computed from the ephemeris have good accuracy. The mean motion correction term, $m_i$ is given as:

$$m_i = \frac{1}{c} \bullet (v_i + \omega \times s_i) \circ (s_i - p)$$

where x denotes vector cross product, ° denotes vector dot product, $v_i$ is the velocity vector of SATPS satellite i, $s_i$ is the position vector of SATPS satellite i, $\omega$ is the Earth rotation vector and p is SATPS receiver 102 position vector, the x, y, and z coordinates of all vectors are in ECEF and all except $\omega$ correspond to the antenna 114 phase centers.

If $(p^*_x, p^*_y, p^*_z)$ are the ECEF coordinates of the reference or approximate position which serves as the initial guess for $(p_x, p_y, p_z)$ and let $b^*$ be the initial guess for pseudorange offset. Expanding the left hand side to a first order approximation using Taylor series gives the following equations:

$$\begin{bmatrix} -l_{1x} & -l_{1y} & -l_{1z} & 1 \\ -l_{2x} & -l_{2y} & -l_{2z} & 1 \\ -l_{3x} & -l_{3y} & -l_{3z} & 1 \\ -d_x & -d_y & -d_z & 0 \end{bmatrix} \bullet \begin{bmatrix} \Delta p_x \\ \Delta p_y \\ \Delta p_z \\ \Delta b \end{bmatrix} = \begin{bmatrix} \Delta \rho_1 \\ \Delta \rho_2 \\ \Delta \rho_3 \\ \Delta h \end{bmatrix}$$

Where, $l_i$ is the line of sight unit vector pointing from the receiver to SATPS satellite i and d is the down direction unit vector pointing along the downward normal to the WGS-84 ellipsoid, $\Delta p_x$, $\Delta p_y$ and $\Delta p_z$ are differential position coordinates, $\Delta b$ is the differential pseudorange offset, $\Delta \rho_1$, $\Delta \rho_2$ and $\Delta \rho_3$ are differential pseudoranges, and $\Delta h$ is the differential h. The line of sight unit vector is given by:

$$l_i = \frac{1}{\sqrt{(s_{ix} - p'_x)^2 + (s_{iy} - p'_y)^2 + (s_{iz} - p'_z)^2}} \bullet (s_i - p^{\bullet})$$

the down direction unit vector is given by:

$$d = \begin{bmatrix} -\cos \lambda^{\bullet} \bullet \cos \phi^{\bullet} \\ -\sin \lambda^{\bullet} \bullet \cos \phi^{\bullet} \\ -\sin \phi^{\bullet} \end{bmatrix}$$

where ($\phi^*$, $\lambda^*$, $h^*$) are the WGS-84 geodetic coordinates of p*.
$$\Delta \rho_i = \rho_i - \rho_i^*$$

where $\rho_i^*$ are obtained from the right hand side of the equations of pseudoranges and average "h" and
$$\Delta h = h - h^*$$

The Taylor series equation is solved for $\Delta p_x$, $\Delta p_y$, $\Delta p_z$, and $\Delta b$. Then the estimates of position and clock bias are updated as:
$$\begin{bmatrix} \hat{p}_x \\ \hat{p}_y \\ \hat{p}_z \\ \hat{b} \end{bmatrix} = \begin{bmatrix} p_x^* \\ p_y^* \\ p_z^* \\ b^* \end{bmatrix} + \begin{bmatrix} \Delta p_x \\ \Delta p_y \\ \Delta p_z \\ \Delta b \end{bmatrix}$$

This is the Newton-Raphson update. Next, the initial guess is replaced by the new estimate as:
$$\begin{bmatrix} p_x^* \\ p_y^* \\ p_z^* \\ b^* \end{bmatrix} = \begin{bmatrix} \hat{p}_x \\ \hat{p}_y \\ \hat{p}_z \\ \hat{b} \end{bmatrix}$$

and the iterations are continued until $\Delta p_x$, $\Delta p_y$, $\Delta p_z$, and $\Delta b$ become less than the threshold.
With the grid of 25 points a two-dimensional polynomial is set up in the auxiliary variables $\phi$ and $\lambda$ which are given in terms of WGS-84 $\phi$ and $\lambda$ as:
$$\overline{\phi} = q \cdot (\phi - \phi_c) \qquad \overline{\lambda} = q \cdot (\lambda - \lambda_c)$$

where q is a scale factor (chosen as 100), and $\phi_c$ and $\lambda_c$ respectively are the WGS-84 latitude and longitude in degrees of the solution obtained previously. The LSQ polynomial surface fit equation is given by:
$$h = p(\overline{\phi}, \overline{\lambda}) = c_0 \cdot \overline{\phi} + c_1 \cdot \overline{\lambda} + c_2 \cdot \overline{\phi}^2 + c_3 \cdot \overline{\phi} \cdot \overline{\lambda} + c_4 \cdot \overline{\lambda}^2 + \cdots + c_{m-2} \cdot \overline{\lambda}^n + c_{m-1}$$

The total number of coefficients, m, for degree, n are given by the recursive formula: m(n)=m(n-1)+(n+1) with m(0)=1. For degree, n=4, m=15. The coefficients, $c_i$, where i=1, ..., m are obtained by solving the following linear equation using a least square method.

$$
\begin{bmatrix}
\bar{\phi}_1 & \bar{\lambda}_1 & \bar{\phi}_1^2 & \phi_1 \cdot \bar{\lambda}_1 & \bar{\lambda}_1^2 & \cdots & \bar{\lambda}_1^n & 1 \\
\bar{\phi}_2 & \bar{\lambda}_2 & \bar{\phi}_2^2 & \phi_2 \cdot \bar{\lambda}_2 & \bar{\lambda}_2^2 & \cdots & \bar{\lambda}_2^n & 1 \\
\vdots & \vdots & \vdots & & \vdots & \vdots & \cdots & \vdots & \vdots \\
\bar{\phi}_r & \bar{\lambda}_r & \bar{\phi}_r^2 & \phi_r \cdot \bar{\lambda}_r & \bar{\lambda}_r^2 & \cdots & \bar{\lambda}_r^n & 1
\end{bmatrix}
\bullet
\begin{bmatrix}
c_0 \\ c_1 \\ c_2 \\ c_3 \\ c_4 \\ \vdots \\ c_{m-2} \\ c_{m-1}
\end{bmatrix}
=
\begin{bmatrix}
h_1 \\ h_2 \\ \vdots \\ h_r
\end{bmatrix}
$$

where the subscript i (except on the coefficient) represents i-th point of the terrain. The points are chosen as follows: The center point (as given by $\phi_c$, $\lambda_c$, and $h_c$) is the point that corresponds to the solution previously obtained. This solution also comes with horizontal error ellipse parameters of the semi-major axis, $a_e$, the semi-minor axis, $b_e$, and the angle the semi-major axis subtends with the east direction $\theta_c$, measured anti-clockwise positive. This information is used to create a grid of points as:

$$
\begin{bmatrix} \Delta n \\ \Delta e \end{bmatrix} =
\begin{bmatrix} \cos\theta_e & -\sin\theta_e \\ \sin\theta_e & \cos\theta_e \end{bmatrix}
\bullet
\begin{bmatrix} i \cdot \Delta a_e \\ j \cdot \Delta b_e \end{bmatrix}
$$
$$
i = -k, \cdots k \qquad j = -k, \cdots, k
$$

and
**[0074]**

$$
\begin{bmatrix} \phi_i \\ \lambda_j \end{bmatrix} =
\begin{bmatrix} \phi_c \\ \lambda_c \end{bmatrix}
\bullet
\begin{bmatrix} \Delta n/((N_c + h)\cos\phi_c) \\ \Delta e/(M_c + h_c) \end{bmatrix}
$$

where,
**[0076]**

$$
M_c = \frac{a(1-e^2)}{(1-e^2\sin^2\phi_c)^{3/2}} \quad and \quad N_c = \frac{a}{\sqrt{1-e^2\sin^2\phi_c}}
$$

where a is the semi-major axis of the WGS-84 ellipsoid and e is its eccentricity. $\Delta a_e$ is chosen to be 1.5 $a_s$ and $\Delta b_c$ is chosen to be 1.5 $b_e$.

The value of k is chosen to be 2, giving total number of points, r=25 and giving a coverage 3-sigma area along the semi-major and semi-minor axes. The degree of the polynomial n, is chosen as 4th order giving number of coefficients, m=15. The system of equations therefore is 25 equations and 15 unknowns and is solved with the help of modified Cram-Schmidt procedure.

The LSQ polynomial surface fit equation in the usual matrix notation is A•C=H and the objective in least squares solution is to minimize $(A•C-H)^T•W•(A•C-H)$, where W is positive definite weighting matrix. The optimum solution is obtained by solving the set $A^T•W•A•C=A^T•W•H$. This set can be written as $B^T•B•C=B^T•\Gamma•H$, by using the decomposition

$W=\Gamma^T\cdot\Gamma$ and using $B=A\cdot\Gamma$. This new set can further be written as $R\cdot C=D^{-1}\cdot Q^T\cdot H$, where B is decomposed as $B=Q\cdot R$, with R unit upper triangular (diagonal elements of R are all ones and lower diagonals are all zeros) and such that $Q^T\cdot Q=D$, D being a diagonal matrix. The upper triangular set of equations can be solved using back-substitution method. In the above, two decompositions are used. The first is: $W=\Gamma^T\cdot\Gamma$. This can be done using Cholesky's method. Usually, W is diagonal and then so is $\Gamma$ and it can be obtained simply by taking square roots of the diagonal elements of W. An even simpler case is when W=I, where I is an identity matrix and then $\Gamma$=I as well. This equal weighting is used in the solution. The second decomposition is $B=Q\cdot R$. This decomposition can be obtained by a modified Gram-Schmidt method that gives Q, R and D by avoiding square root operations since Q is only orthogonal (not orthonormal).

The equations from the three pseudoranges and polynomial surface equation are solved by the LSQ solution method as described previously (using fixed "h") with two exceptions. The last (fourth) equation (fixed "h") is replaced by an altitude equation as a polynomial in $\phi$ and $\lambda$, With this change, it is convenient to consider the first three equations in the unknowns of $\phi$, $\lambda$, and h, rather than in the ECEF frame. So, the equations are written as:

$$\rho_1 = \sqrt{(s_{1x}-p_x(\phi,\lambda,h))^2+(s_{1y}-p_y(\phi,\lambda,h))^2+(s_{1z}-p_z(\phi,\lambda,h))^2}\bullet(1-m_1)+b$$

$$\rho_2 = \sqrt{(s_{2x}-p_x(\phi,\lambda,h))^2+(s_{2y}-p_y(\phi,\lambda,h))^2+(s_{2z}-p_z(\phi,\lambda,h))^2}\bullet(1-m_2)+b$$

$$\rho_3 = \sqrt{(s_{3x}-p_x(\phi,\lambda,h))^2+(s_{3y}-p_y(\phi,\lambda,h))^2+(s_{3z}-p_z(\phi,\lambda,h))^2}\bullet(1-m_3)+b$$

$$h = c_o\cdot\bar{\phi}(\phi)+c_1\cdot\bar{\lambda}(\lambda)+c_2\cdot\bar{\phi}(\phi)^2+c_3\cdot\bar{\phi}(\phi)\cdot\bar{\lambda}\lambda+C_4\cdot\bar{\lambda}(\lambda)^2+\cdots+c_{m-2}\cdot\bar{\lambda}(\lambda)^n+c_{m-1}$$

where:

$$p_x=(N+h)\bullet\cos\phi\bullet\cos\lambda$$

$$p_y=(N+h)\bullet\cos\phi\bullet\sin\lambda$$

$$p_z=((1-e^2)\bullet N+h)\bullet\sin\phi$$

The set of equations is solved using Newton-Raphson method. This time the initial guess is given by ($\phi_c$, $\lambda_c$, $h_c$) which is obtained previously. Further let $b_c$ be the initial guess for the pseudorange offset, taken again from the previous solution. Expanding the left side of the polynomial surface equations around the initial guess to a first order approximation using Taylor series and solving for $\Delta\phi$, $\Delta\lambda$, $\Delta h$, and $\Delta b$ and then applying the same procedure as for the fixed "h" LSQ solution results in a sought solution.

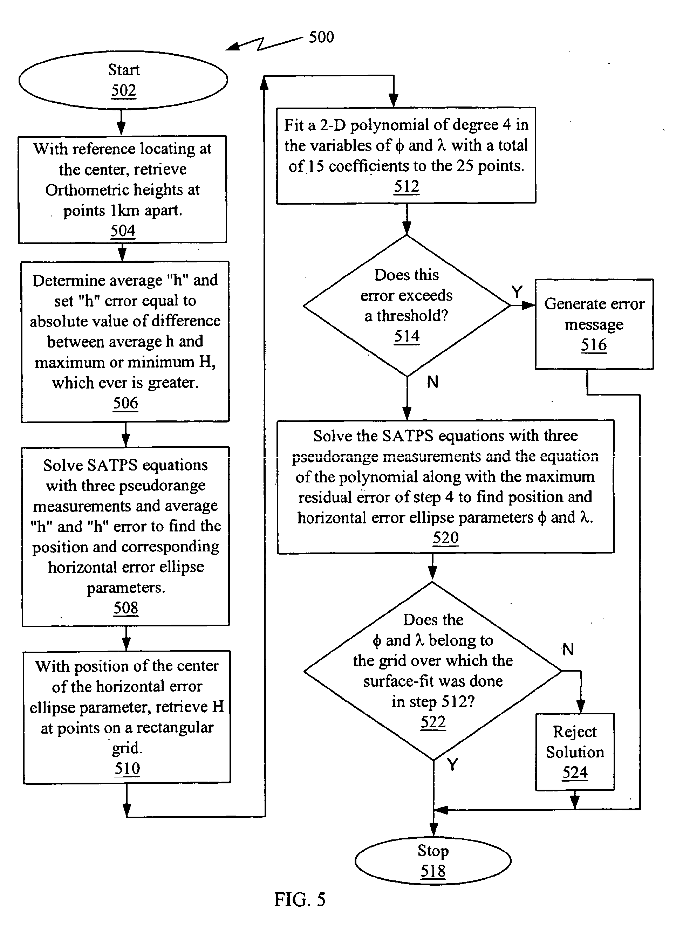

In FIG. 5, a flow chart 500 of the steps for determining location with a SATPS receiver with digital terrain elevation data is shown. The SATPS receiver 102 starts 502 by receiving three SATPS satellite spread spectrum signal 116, 118 and 120 and digital terrain elevation data from digital terrain elevation data memory 262 in server 250. Upon a reference location being determined, the orthometric heights at points 1 km apart in the easting and northing direction are retrieved with the reference location at the center 504. A total of $(2\bullet N+1)^2$ points are considered on a grid of $(2\bullet N+1)$ x$(2\bullet N+1)$ points. The orthometric "H" coordinates are converted to WGS 84 "h". The average "h" is determined and the "h" error equal to absolute value of the difference between the average "h" and the maximum or minimum "h" (whichever is the greater).

The SATPS pseudorange measurements, average "h" and the "h" error in step 506 are used to find the position and corresponding horizontal error ellipse parameters (508). Then, with the position determined in step 508 at the center, "H" at points on a rectangular grid are constructed along the major and minor axes of the ellipse in 510. The interval between successive points along the major axis is 1.5 times the major-axis magnitude and along the minor axis, it is equal to 1.5 times the minor-axis magnitude. A total of 25 points are considered on a grid of 5x5 points.

A two-dimensional polynomial of degree 4 is fit in the variables of $\phi$ and $\lambda$ with 15 coefficients to the 25 points previously obtained in step 510. The maximum residual error for the polynomial fit is determined and if the error exceeds a predetermined threshold in step 514, then an error message 516 is generated and processing is complete 518. Otherwise, if the predetermined threshold is not exceeded in step 514, then the SATPS pseudorange equations and the equation of the polynomial along with the maximum residual error of step 512 are solved to determine the position 520. In step 522, a check is made to determine if the $\phi$ and $\lambda$ obtained in step 520 belong to the grid over which the surface-fit was done in step 512. If yes then the solution is accepted and processing is complete 518, otherwise the solution is rejected 524.

The processing has been shown as being stopped 518 for illustrative purposes. In practice, processing may continue and start at step 502 again, enter an idle state until instructed to process new location information, or execute other plurality of machine-readable instructions that are stored in some type of memory. The steps previously described, may occur with additional steps or with steps combined.

The foregoing description of an implementation has been presented for purposes of illustration and description. It is not exhaustive and does not limit the claimed inventions to the precise form disclosed. Modifications and variations are possible in light of the above description or may be acquired from practicing the invention. For example, the described implementation includes software but the invention may be implemented as a combination of hardware and software or in hardware alone. Note also that the implementation may vary between systems. The claims define the scope of the invention.

**Claims**

1. A method of determining the location of a satellite positioning receiver (102) in receipt of at least three satellite positioning signals (116, 118, 120, 122, 128), comprising:

    identifying a reference location with the at least three satellite positioning signals (116, 118, 120, 122, 128);
    retrieving an initial height associated with said reference location;
    determining an average height along with an average height error from the initial height;
    deriving at least three simultaneous equations associated with the at least three positioning signals (116, 118, 120, 122, 128); and
    solving the at least three simultaneous equations with the average height and the average height error, resulting in a position and a corresponding horizontal error ellipse;
    **characterized by**
    defining grid points along the direction of the major and minor axes of said error ellipse;
    obtaining altitude values at said grid points from digital terrain elevation data;
    constructing a two-dimensional polynomial surface fit, in variables of latitude and longitude, to the obtained altitude values; and
    solving the at least three simultaneous equations and the two-dimensional polynomial, resulting in the position of the satellite positioning receiver (102).

2. The method of claim 1, where determining an average height further includes:

    identifying one of a minimum height and a maximum height; and
    setting the height error equal to the absolute value of the difference between the one of the minimum height and the maximum height and the average height.

3. The method of claim 1, where retrieving an initial height further includes:

    transmitting a plurality of code phases to a server (250) where each of the code phases is associated with each of the positioning signal (116, 118, 120, 122, 128); and
    accessing digital terrain data stored in a memory (260) to retrieve the initial height.

4. The method of claim 1, where retrieving an initial height further includes:

    receiving the initial height from a memory (212) located within the satellite positioning receiver (102).

5. The method of any of claims 1-4, further including:

    acquiring another height using variables from the two dimensional polynomial; and

comparing the difference between the other height and altitude to a predetermined threshold.

6. The method of claim 5, where the predetermined threshold is 100 meters.

7. The method of any of claims 1-6, where the receiver is located in a server (250).

8. A satellite positioning receiver apparatus (102) in receipt of at least three satellite positioning signals (116, 118, 120, 122, 128), comprising:

   means for identifying a reference location with the at least three satellite positioning signals (116, 118, 120, 122, 128);
   means for retrieving an initial height associated with said reference location;
   means for determining an average height along with an average height error from the initial height;
   means for deriving at least three simultaneous equations associated with the at least three positioning signals (116 118, 120, 122, 128); and
   means for solving the at least three simultaneous equations with the average height and the average height error, resulting in a position and a corresponding horizontal error ellipse;
   **characterized by**
   means for defining grid points along the direction of the major and minor axes of said error ellipse;
   means for obtaining altitude values at said grid points from digital terrain elevation data;
   means for constructing a two-dimensional polynomial surface fit, in variables of latitude and longitude to the obtained altitude values; and
   means for solving the at least three simultaneous equations and the two-dimensional polynomial, resulting in an altitude of the satellite positioning receiver (102).

9. The apparatus of claim 8, wherein the determining an average height means further includes:

   means for identifying one of a minimum height and a maximum height; and
   means for setting the height error equal to the absolute value of the difference between the one of the minimum height and the maximum height and the average height.

10. The apparatus of claim 8 or 9, wherein the means for retrieving an initial height further includes:

    means for receiving the initial height from a server (250) located in a wireless network.

11. The apparatus of claim 10, wherein the wireless network is a cellular communication network.

12. The apparatus of claim 8, wherein the means for retrieving an initial height further includes:

    means for receiving the initial height from a memory located within the satellite positioning receiver.

13. The apparatus of any of claims 8-12, further including:

    means for acquiring another height using variables from the two dimensional polynomial; and
    means for comparing the difference between the other height and altitude to a predetermined threshold.

14. The apparatus of claim 13, where the predetermined threshold is 100 meters.

15. A computer readable medium containing executable computer program instructions which, when executed by a data processing system, cause said data processing system to perform the method of any of claims 1 to 7.

16. The medium of claim 15, wherein the instruction for retrieving an initial height further causes the data processing system to receive the initial height from a server located in a wireless network.

17. The medium of claim 16, wherein the wireless network is a cellular communication network.

18. The medium of claim 15, wherein the instruction for retrieving an initial height further causes the data processing system to receive the initial height from a memory.

**19.** A server, comprising:

a transceiver (252) adapted to receive a plurality of satellite code phases;
a memory (262) with digital terrain elevation data; and
a controller (256) adapted to perform the method of any of claims 1 to 7.

**Patentansprüche**

**1.** Verfahren zum Bestimmen des Orts eines Satellitenpositionsbestimmungsempfängers (102), bei Empfang von mindestens drei Satellitenpositionsbestimmungssignalen (116, 118, 120, 122, 128), mit
Identifizieren eines Referenzorts mit den mindestens drei Satellitenpositionsbestimmungssignalen (116, 118, 120, 122, 128);
Gewinnen einer Anfangshöhe, die zu dem Referenzort gehört;
Bestimmen einer Durchschnittshöhe zusammen mit einem Durchschnittshöhenfehler aus der Anfangshöhe;
Ableiten von mindestens drei zeitgleichen Gleichungen, die zu den mindestens drei Positionsbestimmungssignalen (116, 118, 120, 122, 128) gehören;
Lösen der mindestens drei zeitgleichen Gleichungen mit der Durchschnittshöhe und dem Durchschnittshöhenfehler, was eine Position und eine entsprechende horizontale Fehlerellipse zur Folge hat; **gekennzeichnet durch**
Definieren von Gitterpunkten entlang der Richtung der Haupt- und Nebenachsen der Fehlerellipse;
Gewinnen von Höhenwerten an den Gitterpunkten aus digitalen Geländeelevationsdaten;
Konstruieren einer zweidimensionalen Polynomoberflächenpassung, mit Variablen der geografischen Breite und Länge, für die gewonnenen Höhenwerte; und
Lösen der mindestens drei zeitgleichen Gleichungen und des zweidimensionalen Polynoms, was die Position des Satellitenpositionsbestimmungsempfängers (102) zur Folge hat.

**2.** Verfahren nach Anspruch 1, wobei das Bestimmen einer Durchschnittshöhe ferner aufweist
Identifizieren von einer von einer minimalen Höhe und einer maximalen Höhe; und
Setzen des Höhenfehlers gleich auf den absoluten Fehler der Differenz zwischen der einen von der minimalen Höhe und der maximalen Höhe und der Durchschnittshöhe.

**3.** Verfahren nach Anspruch 1, wobei das Gewinnen der Anfangshöhe ferner aufweist
Senden einer Mehrzahl von Code-Phasen an einen Server (250), wobei jede der Codephasen zu jedem der Positionsbestimmungssignale (116, 118, 120, 122, 128) gehört; und
Zugreifen auf digitale Geländedaten, die in einem Speicher (260) gespeichert sind, um die Anfangshöhe zu gewinnen.

**4.** Verfahren nach Anspruch 1, wobei das Gewinnen der Anfangshöhe ferner aufweist
Empfangen der Anfangshöhe von einem Speicher (212), der innerhalb des Satellitenpositionsbestimmungsempfängers (102) positioniert ist.

**5.** Verfahren nach einem der Ansprüche 1 bis 4, ferner mit
Erfassen einer anderen Höhe unter Verwendung von Variablen von dem zweidimensionalen Polynom; und
Vergleichen der Differenzen zwischen der anderen Höhe und der Höhe mit einem vorbestimmten Schwellenwert.

**6.** Verfahren nach Anspruch 5, wobei der vorbestimmte Schwellenwert 100 m ist.

**7.** Verfahren nach einem der Ansprüche 1 bis 6, wobei der Empfänger in einem Server (250) lokalisiert ist.

**8.** Satellitenpositionsbestimmungsempfängervorrichtung (102) bei Empfang von mindestens drei Satellitenpositionsbestimmungssignalen (116, 118, 120, 122, 128), enthaltend
ein Mittel zum Identifizieren eines Referenzorts mit den mindestens drei Satellitenpositionsbestimmungssignalen (116, 118, 120, 122, 128);
ein Mittel zum Gewinnen einer Anfangshöhe, die zu dem Referenzpunkt gehört;
ein Mittel zum Bestimmen einer Durchschnittshöhe zusammen mit einem Durchschnittshöhenfehler aus der Anfangshöhe;
ein Mittel zum Ableiten von mindestens drei zeitgleichen Gleichungen, die zu den mindestens drei Positionsbestimmungssignalen (116, 118, 120, 122, 128) gehören; und
ein Mittel zum Lösen der mindestens drei zeitgleichen Gleichungen mit der Durchschnittshöhe und dem Durchschnittshöhenfehler, was eine Position und eine entsprechende horizontale Fehlerellipse zur Folge hat; **gekennzeichnet durch**

ein Mittel zum Definieren von Gitterpunkten entlang der Richtung der Haupt- und Nebenachsen der Fehlerellipse;
ein Mittel zum Gewinnen von Höhenwerten an den Gitterpunkten aus digitalen Geländeelevationsdaten;
ein Mittel zum Konstruieren einer zweidimensionalen Polynomoberflächenpassung, in Variablen der geografischen Breite und Länge, für die gewonnenen Höhenwerte; und
ein Mittel zum Lösen der mindestens drei zeitgleichen Gleichungen und des zweidimensionalen Polynoms, was eine Höhe des Satellitenpositionsbestimmungsempfängers (102) zur Folge hat.

9. Vorrichtung nach Anspruch 8, bei der das Mittel zum Bestimmen einer Durchschnittshöhe ferner aufweist
ein Mittel zum Identifizieren von einer von einer minimalen Höhe und einer maximalen Höhe; und
ein Mittel zum Setzen des Höhenfehlers gleich auf den absoluten Fehler der Differenz zwischen der einen von der minimalen Höhe und der maximalen Höhe und der Durchschnittshöhe.

10. Vorrichtung nach Anspruch 8 oder 9, bei der das Mittel zum Gewinnen einer Anfangshöhe ferner aufweist:

ein Mittel zum Empfangen der Anfangshöhe von einem Server (250), der in einem drahtlosen Netzwerk lokalisiert ist.

11. Vorrichtung nach Anspruch 10, bei dem das drahtlose Netzwerk ein zellulares Kommunikationsnetzwerk ist.

12. Vorrichtung nach Anspruch 8, bei der das Mittel zum Gewinnen einer Anfangshöhe ferner aufweist
ein Mittel zum Empfangen der Anfangshöhe von einem Speicher, der innerhalb des Satellitenpositionsbestimmungsempfängers lokalisiert ist.

13. Vorrichtung nach einem der Ansprüche 8 bis 12, ferner mit
einem Mittel zum Erfassen einer anderen Höhe unter Verwendung von Variablen von dem zweidimensionalen Polynom; und
ein Mittel zum Vergleichen der Differenz zwischen der anderen Höhe und der Höhe mit einem vorbestimmten Schwellenwert.

14. Vorrichtung nach Anspruch 13, bei der der vorbestimmte Schwellenwert 100 m ist.

15. Computerlesbares Medium, das ausführbare Computerprogrammanweisungen enthält, die, wenn sie durch ein Datenverarbeitungssystem ausgeführt werden, das Datenverarbeitungssystem dazu veranlassen das Verfahren gemäß einem der Ansprüche 1 bis 7 durchzuführen.

16. Medium nach Anspruch 15, wobei die Anweisung zum Holen einer Anfangshöhe ferner das Datenverarbeitungssystem veranlasst, die Anfangshöhe von einem Server zu empfangen, der in einem Drahtlosnetzwerk ist.

17. Medium nach Anspruch 16, wobei das Drahtlosnetzwerk ein zellulares Kommunikationsnetzwerk ist.

18. Medium nach Anspruch 15, wobei die Anweisung zum Gewinnen einer Anfangshöhe ferner das Datenverarbeitungssystem veranlasst zum Empfangen der Anfangshöhe von einem Speicher.

19. Server, mit
einem Sendeempfänger (252), der angepasst ist zum Empfangen einer Mehrzahl von Satellitencodephasen;
einen Speicher (262) mit digitalen Geländeelevationsdaten; und
einer Steuerung (256), die angepasst ist zum Durchführen eines Verfahrens nach einem der Ansprüche 1 bis 7.

**Revendications**

1. Procédé pour déterminer la localisation d'un récepteur de localisation par satellite (102) recevant au moins trois signaux de localisation par satellite (116, 118, 120, 122, 128), comprenant les étapes consistant à :

identifier une localisation de référence avec les au moins trois signaux de localisation par satellite (116, 118, 120, 122, 128) ;

récupérer une hauteur initiale associée à ladite localisation de référence ;
déterminer une hauteur moyenne conjointement à une erreur de hauteur moyenne à partir de la hauteur initiale ;
dériver au moins trois équations simultanées associées aux au moins trois signaux de localisation (116, 118, 120, 122, 128) ; et
résoudre les au moins trois équations simultanées avec la hauteur moyenne et l'erreur de hauteur moyenne, ayant pour résultat une position et une ellipse d'erreur horizontale correspondante ;

**caractérisé par** les étapes consistant à :

définir des points de grille le long de la direction des grand et petit axes de ladite ellipse d'erreur ;
obtenir des valeurs d'altitude auxdits points de grille à partir de données numériques d'élévation de terrain ;
construire un ajustement de surface polynomial bidimensionnel, dans des variables de latitude et longitude, par rapport aux valeurs d'altitude obtenues ; et
résoudre les au moins trois équations simultanées et l'élément polynomial bidimensionnel, ayant pour résultat la position du récepteur de localisation par satellite (102).

2. Procédé selon la revendication 1, dans lequel l'étape consistant à déterminer une hauteur moyenne comprend en outre les étapes consistant à :

identifier une première parmi une hauteur minimum et une hauteur maximum ; et
régler l'erreur de hauteur pour qu'elle soit égale à la valeur absolue de la différence entre la première parmi la hauteur minimum et la hauteur maximum et la hauteur moyenne.

3. Procédé selon la revendication 1, dans lequel l'étape consistant à récupérer une hauteur initiale comprend en outre les étapes consistant à :

transmettre une pluralité de phases de code à un serveur (250) où chacune des phases de code est associée à chacun des signaux de localisation (116, 118, 120, 122, 128) ; et
accéder à des données numériques de terrain stockées dans une mémoire (260) pour récupérer la hauteur initiale.

4. Procédé selon la revendication 1, dans lequel l'étape consistant à récupérer une hauteur initiale comprend en outre l'étape consistant à :

recevoir la hauteur initiale à partir d'une mémoire (212) située à l'intérieur du récepteur de localisation par satellite (102).

5. Procédé selon une quelconque des revendications 1 à 4, comprenant en outre les étapes consistant à :

acquérir une autre hauteur à l'aide de variables à partir de l'élément polynomial bidimensionnel ; et
comparer la différence entre l'autre hauteur et l'altitude à un seuil prédéterminé.

6. Procédé selon la revendication 5, dans lequel le seuil prédéterminé est 100 mètres.

7. Procédé selon une quelconque des revendications 1 à 6, dans lequel le récepteur est situé dans un serveur (250).

8. Appareil récepteur de localisation par satellite (102) recevant au moins trois signaux de localisation par satellite (116, 118, 120, 122, 128), comprenant :

des moyens destinés à identifier une localisation de référence avec les au moins trois signaux de localisation par satellite (116, 118, 120, 122, 128) ;
des moyens destinés à récupérer une hauteur initiale associée à ladite localisation de référence ;
des moyens destinés à déterminer une hauteur moyenne conjointement à une erreur de hauteur moyenne à partir de la hauteur initiale ;
des moyens destinés à dériver au moins trois équations simultanées associées aux au moins trois signaux de localisation (116 118, 120, 122, 128) ; et
des moyens destinés à résoudre les au moins trois équations simultanées avec la hauteur moyenne et l'erreur de hauteur moyenne, ayant pour résultat une position et une ellipse d'erreur horizontale correspondante ;

**caractérisé par** :

des moyens destinés à définir des points de grille le long de la direction des grand et petit axes de ladite ellipse d'erreur ;

des moyens destinés à obtenir des valeurs d'altitude auxdits points de grille à partir de données numériques d'élévation de terrain ;

des moyens destinés à construire un ajustement de surface polynomial bidimensionnel, dans des variables de latitude et longitude par rapport aux valeurs d'altitude obtenues ; et

des moyens destinés à résoudre les au moins trois équations simultanées et l'élément polynomial bidimensionnel, ayant pour résultat une altitude du récepteur de localisation par satellite (102).

9. Appareil selon la revendication 8, dans lequel les moyens destinés à déterminer une hauteur moyenne comprennent en outre :

des moyens destinés à identifier une première parmi une hauteur minimum et une hauteur maximum ; et

des moyens destinés à régler l'erreur de hauteur égale à la valeur absolue de la différence entre la première parmi la hauteur minimum et la hauteur maximum et la hauteur moyenne.

10. Appareil selon la revendication 8 ou 9, dans lequel les moyens destinés à récupérer une hauteur initiale comprennent en outre :

des moyens destinés à recevoir la hauteur initiale à partir d'un serveur (250) situé dans un réseau sans fil.

11. Appareil selon la revendication 10, dans lequel le réseau sans fil est un réseau de communication cellulaire.

12. Appareil selon la revendication 8, dans lequel les moyens destinés à récupérer une hauteur initiale comprennent en outre :

des moyens destinés à recevoir la hauteur initiale à partir d'une mémoire située à l'intérieur du récepteur de localisation par satellite.

13. Appareil selon une quelconque des revendications 8 à 12, comprenant en outre :

des moyens destinés à acquérir une autre hauteur à l'aide de variables à partir de l'élément polynomial bidimensionnel ; et

des moyens destinés à comparer la différence entre l'autre hauteur et l'altitude à un seuil prédéterminé.

14. Appareil selon la revendication 13, dans lequel le seuil prédéterminé est 100 mètres.

15. Support lisible par ordinateur contenant des instructions de programme informatique exécutables qui, lorsqu'elles sont exécutées par un système de traitement de données, font en sorte que ledit système de traitement de données exécute le procédé selon une quelconque des revendications 1 à 7.

16. Support selon la revendication 15, dans lequel l'instruction pour récupérer une hauteur initiale fait en outre en sorte que le système de traitement de données reçoive la hauteur initiale à partir d'un serveur situé dans un réseau sans fil.

17. Support selon la revendication 16, dans lequel le réseau sans fil est un réseau de communication cellulaire.

18. Support selon la revendication 15, dans lequel l'instruction pour récupérer une hauteur initiale fait en outre en sorte que le système de traitement de données reçoive la hauteur initiale à partir d'une mémoire.

19. Serveur, comprenant :

un émetteur-récepteur (252) adapté pour recevoir une pluralité de phases de code de satellite ;

une mémoire (262) avec des données numériques d'élévation de terrain ; et

un dispositif de commande (256) adapté pour exécuter le procédé selon une quelconque des revendications 1 à 7.

EP 1 651 977 B1

FIG. 1

FIG. 2

EP 1 651 977 B1

1x1 Deg.

FIG. 3

FIG. 4

Start
502

With reference locating at
the center, retrieve
Orthometric heights at
points 1km apart.
504

Determine average "h" and
set "h" error equal to
absolute value of difference
between average h and
maximum or minimum H,
which ever is greater.
506

Solve SATPS equations
with three pseudorange
measurements and average
"h" and "h" error to find the
position and corresponding
horizontal error ellipse
parameters.
508

With position of the center
of the horizontal error
ellipse parameter, retrieve H
at points on a rectangular
grid.
510

500

Fit a 2-D polynomial of degree 4 in
the variables of $\phi$ and $\lambda$ with a total
of 15 coefficients to the 25 points.
512

Does this
error exceeds
a threshold?
514

Y

Generate error
message
516

N

Solve the SATPS equations with three
pseudorange measurements and the equation
of the polynomial along with the maximum
residual error of step 4 to find position and
horizontal error ellipse parameters $\phi$ and $\lambda$.
520

Does the
$\phi$ and $\lambda$ belong to
the grid over which the
surface-fit was done
in step 512?
522

N

Reject
Solution
524

Y

Stop
518

FIG. 5

20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 6061018 A